# EUROPÄISCHE PATENTSCHRIFT

(11) **EP 0 930 991 B1**
(45) Veröffentlichungstag und Bekanntmachung des Hinweises auf die Patenterteilung: **16.10.2002**
(21) Anmeldenummer: 98943660.5
(22) Anmeldetag: 09.07.1998
(51) Int. Cl.: B60S 1/38

(54) **WISCHBLATT ZUM REINIGEN VON SCHEIBEN AN KRAFTFAHRZEUGEN**
WIPER BLADE FOR CLEANING MOTOR VEHICLE WINDSCREENS
RACLETTE D'ESSUIE-GLACE POUR LE NETTOYAGE DE VITRES DE VEHICULES AUTOMOBILES

(30) Priorität: 14.08.1997 DE 19735300
(43) Veröffentlichungstag der Anmeldung: 28.07.1999
(73) Patentinhaber: ROBERT BOSCH GMBH, 70442 Stuttgart (DE)
(72) Erfinder: KESSLER, Peter, D-77880 Sasbach (DE); MAYER, Juergen, D-76571 Gaggenau (DE); VANROY, Jan, B-3290 Schaffen (BE); LAMMENS, Koen, B-3001 Leuven (BE)
(86) Internationale Anmeldenummer: DE9801894
(87) Internationale Veröffentlichungsnummer: WO99008912

(56) Entgegenhaltungen:
- DE-A- 19 522 273
- GB-A- 2 036 547
- US-A- 4 993 103

## Beschreibung

### Stand der Technik

Die Erfindung geht von einem Wischblatt gemäß den Merkmalen des Oberbegriffs des Patentanspruchs 1 aus.

Bei Scheibenwischanlagen für Kraftfahrzeuge ist im allgemeinen auf einer Antriebsachse ein Befestigungsteil befestigt, mit dem über eine Achse ein Gelenkteil verbunden ist. An das Gelenkteil schließt sich eine Wischstange an, in die ein Wischblatt eingehängt ist. Das Wischblatt weist ein mehrgliedriges Tragbügelsystem auf mit an einem Hauptbügel angelenkten Zwischenbügeln, mit deren Enden Krallenbügel gelenkig verbunden sind, die an ihren Enden Haltekrallen aufweisen. Von den Haltekrallen wird eine Wischleiste gehalten. Das Tragbügelsystem ermöglicht, daß sich die Wischleiste einer gebogenen Scheibe beim Wischen anpaßt. In das Gummiprofil der Wischleiste ist eine Federschiene eingelegt, um einen gleichmäßigen Auflagedruck auf die Scheibe zu erreichen.

Wird die Scheibenwischanlage betätigt, gleitet die Wischleiste über die Kraftfahrzeugscheibe und unterliegt dabei einem unvermeidbaren Verschleiß, der die Reinigungsqualität mindert. Die Wischleiste muß daher von Zeit zu Zeit ersetzt werden. Da das Tragbügelsystem des Wischblatts dann in aller Regel noch voll funktionsfähig ist, wird dem Endverbraucher ein sogenannter Nachfüllsatz angeboten, bei dem das alte Tragbügelsystem weiter verwendet werden kann.

Aus der DE 195 22 273 A1 ist ein Wischblatt bekannt, in das ein Nachfüllsatz eingebracht werden kann, der aus einer Wischleiste mit einer Federschiene und einem Sicherungskörper besteht. In einer Kopfleiste der Wischleiste ist in einem rundum geschlossenen, an den Endflächen der Wischleiste mündenden Längskanal die Federschiene angeordnet. Auf ein Ende der Kopfleiste ist der Sicherungskörper aufgeschoben und greift dabei mit die Kopfleiste umfassenden Schenkeln in Längsnuten an zwei gegenüberliegenden Längsseiten der Kopfleiste. Dadurch ist er bis auf die Längsrichtung auf der Kopfleiste fixiert.

Der Sicherungskörper weist eine Spannklammer auf, die Kanalwände der Kopfleiste in Ausnehmungen der Federschiene drückt und dadurch den Sicherungskörper, die Federschiene und die Wischleiste in Längsrichtung zueinander fixiert. Nachdem die abgenutzte Wischleiste aus dem Wischblatt entfernt ist, kann der vormontierte Nachfüllsatz in die Haltekrallen des Tragbügelsystems des Wischblatts eingeschoben werden, wobei die Haltekrallen in die Längsnuten der Wischleiste greifen. Der Sicherungskörper hat neben der Spannklammer eine Federklammer mit auslenkbaren Federarmen und daran angeordneten Haken. Ist der Nachfüllsatz nahezu vollständig in die Haltekrallen eingeschoben, werden die Haken der Federklammer von einer am äußeren Ende des Tragbügelsystems angeordneten Haltekralle ausgelenkt und rasten auf der anderen Seite in Form eines Schnappverschlußes an der Haltekralle ein, so daß der Sicherungskörper zu beiden Seiten an der Haltekralle anliegt und die Wischleiste in Längsrichtung am Tragbügelsystem fixiert.

Die Federklammer wird mit einem Stanz- oder einem sonstigen Schneideverfahren nach oder vor einem Biegevorgang aus einem größeren Blechteil herausgetrennt. Die Haken werden durch eine in die geschnittene Außenkontur des Blechteils eingebrachte rechtwinklige Stufe gebildet, die sich nach dem Biegevorgang im montierten Zustand in die von der Scheibe wegweisenden Richtung erstreckt.

Je dünner das Blech ist, um so schärfere Kanten entstehen an der geschnittenen Außenkontur, die nur mit großem Aufwand und häufig nicht vollständig entfernt werden können. Bei der Demontage des Nachfüllsatzes muß bei der beschriebenen Federklammer auf die geschnittene Außenkontur im Bereich der Haken gedrückt werden, um diese auszurasten. Hierbei können die scharfen Außenkonturen zu Verletzungen führen. Ferner besteht eine Verletzungsgefahr nicht nur bei der Demontage, sondern bei der Montage, wie auch bei Reinigungsarbeiten usw..

### Vorteile der Erfindung

Bei der erfindungsgemäßen Lösung nach den Merkmalen des Anspruchs 1 sind die Haken durch Biegen oder Prägen eines Arms des Sicherungskörpers geformt, wodurch sich quer zur Auslenkrichtung unabhängig von der Materialstärke breite Flächen ergeben, die bei der Montage und der Demontage Verletzungen vermeiden. Insbesondere bei der Demontage des Sicherungskörpers muß nicht auf eine geschnittene Außenkontur gedrückt werden, um den Sicherungskörper bzw. den Haken zu entrasten. Zudem kann die Blechseite, bei der sich möglicherweise beim Zuschneiden an einer Kante ein Grat bildet, so gelegt werden, daß diese Kante in Betätigungsrichtung weist. Durch die sich in Montagerichtung an den Haken anschließende Führungsfläche wird eine gefährliche, geschnittene Außenkonturkante im Bereich des Hakens vermieden. Ferner sollte der Arm sich selbständig auslenken, wenn der Sicherungskörper montiert wird, damit er nach der Haltekralle in eine Einraststellung zurückschnappen kann. Dies wird mit der Führungsfläche erreicht, die entweder schräg zur Montagerichtung verläuft oder bei der Montage entsprechend auf eine Wandung der Haltekralle trifft und den Arm auslenkt.

Der Arm des Sicherungskörpers kann außen an der Haltekralle eines Krallenbügels vorbeigeführt oder vorzugsweise zwischen der Haltekralle und der Wischleiste durchgeführt sein und sichert die Wischleiste mit dem Haken in Form einer Schnappverbindung, indem er nach der Haltekralle an dieser einrastet. Bei der Demontage muß der Haken aus der Einraststellung gedrückt werden, um den Sicherungskörper zu lösen bzw. die Wischleiste herauszunehmen. Hierfür sollte der Haken leicht zugänglich angeordnet sein. Dies wird in weiterer Ausgestaltung der Erfindung mit zumindest einem seitlich der Kopfleiste in Längsrichtung der Wischleiste verlaufenden Arm erreicht, der einen sich seitlich nach außen erstreckenden Haken aufweist. Der Haken ist damit von der Seite frei zugänglich, ohne daß Bauteile den Zugang und damit die Demontage behindern und kann damit leicht aus der Einraststellung in Richtung der Wischleiste gedrückt werden. Möglich ist auch, daß der Arm und der Haken auf der der Scheibe abweisenden Seite der Wischleiste, d.h. auf einer oberen Fläche der Kopfleiste, angeordnet sind. Der Zugang zum Haken könnte jedoch bei einer derartigen Ausgestaltung durch den Krallenbügel behindert werden.

In weiterer Ausgestaltung der Erfindung sind zwei sich im wesentlichen parallel zueinander erstreckende Arme an einem plattenförmigen Basisteil einer Federklammer des Sicherungskörpers angeordnet. Das plattenförmige Basisteil liegt auf der von der Scheibe abweisenden oberen Fläche der Kopfleiste auf, wobei sich die Arme seitlich in Längsrichtung der Wischleiste erstrecken. Möglich ist auch, daß die Wischleiste nur mit einem Arm gesichert wird, ein besserer Halt wird jedoch mit zwei Armen und Haken erreicht. Bei einer ebenen Anlauffläche liegen die beiden Haken in einer Querebene, wodurch sie von zwei Seiten in einer Ebene in Richtung Wischleiste günstig aus der Einraststellung gedrückt werden können, beispielsweise mit einer Hand, mit Daumen und Zeigefinger.

In der Wischleiste können mehrere Federschienen angeordnet sein. Vorzugsweise ist jedoch nur eine Federschiene in einem rundum geschlossenen, an zwei Endflächen der Wischleiste mündenden Längskanal angeordnet. Sind die Arme der Federklammer zwischen der Haltekralle und der Wischleiste durchgeführt, müssen diese in Richtung der Wischleiste gedrückt werden, um die Wischleiste zu montieren und um bei der Demontage die Haken aus der Einraststellung zu drücken. Es wird vorgeschlagen, daß die Federschiene im Bereich des Hakens, vorzugsweise von einer Hakenschulter in Montagerichtung bis ans Ende des Arms, eine Ausnehmung hat, wodurch der Arm gemeinsam mit dem Haken bei der Montage und bei der Demontage in die Ausnehmung in Richtung Wischleiste gedrückt werden kann.

Eine besonders kostengünstig herzustellende Federklammer ergibt sich, wenn diese mit den die Haken aufweisenden Armen einstückig ausgebildet ist. Als Material wird vorzugsweise Federbandstahl verwendet, das die entsprechende Elastizität besitzt, um den Schnappverschluß zu erzeugen.

Damit der Sicherungskörper die Wischleiste an der Haltekralle in Längsrichtung sichern kann, muß dieser fest mit der Wischleiste verbunden sein, nachdem der Haken eingerastet ist.
Dies kann grundsätzlich durch Form-, Kraft- und möglicherweise in Ausnahmefällen auch durch Stoffschluß erreicht werden. Vorgeschlagen wird, daß der Sicherungskörper eine Spannklammer aufweist, die mit quer zur Längserstreckung verlaufenden Schenkeln die Kopfleiste der Wischleiste zumindest teilweise umgreift und seitliche Kanalwände der Wischleiste in Ausnehmungen der in dem rundum geschlossenen Längskanal angeordneten Federschiene drückt. Damit wird mit der Spannklammer die Federschiene in und der Sicherungskörper auf der Wischleiste form- und kraftschlüssig befestigt. Die Spannklammer kann als separates Bauteil ausgeführt sein, das nach der Montage kraft- und/oder formschlüssig mit der Federklammer verbunden ist. Es wird jedoch vorgeschlagen, daß die Spannklammer einstückig an die Federklammer angeformt ist, wodurch eine kompakte, kostengünstige Anordnung erreicht wird, die leicht zu montieren ist.

In weiterer Ausgestaltung der Erfindung ist in der Ausnehmung der Federschiene ein schmaler Steg angeordnet, um den die Schenkel der montierten Spannklammer das elastische Material der Wischleiste pressen, wodurch ein günstiger Formschluß zwischen der Federschiene und der Wischleiste erreicht wird.

In weiterer Ausgestaltung der Erfindung ist an den die Kopfleiste der Wischleiste seitlich umfassenden Schenkeln der Spannklammer je ein sich in Montagerichtung erstreckender Lappen angeordnet, der bei montiertem Nachfüllsatz von der Haltekralle übergriffen ist. Die Lappen werden von der Haltekralle in ihrer vorschriftsmäßigen Montagestellung gehalten, wodurch die Schenkel ohne besonderen Herstellungs- und Montageaufwand gegen Auffedern gesichert sind.

Zum Spielausgleich zwischen dem Sicherungskörper und der Haltekralle und damit zwischen dem Nachfüllsatz und dem Tragbügelsystem sind die Lappen aus der Ebene der Schenkel heraus nach außen gekrümmt, wobei das freie Ende der Lappen eine nach innen gerichtete Anlauffläche bildet. Die Anlaufflächen kommen vor den Lappen mit der Haltekralle in Kontakt und drücken bei der Montage die Lappen nach innen, wodurch die Montage erleichtert und das Spiel ausgeglichen wird.

Der Nachfüllsatz wird nur in eine Längsrichtung durch die Haken gesichert. In weiterer Ausgestaltung der Erfindung sichert der Sicherungskörper den Nachfüllsatz in die entgegengesetzte Richtung mit zumindest einer Auswölbung am plattenförmigen Basisteil im Bereich der Schenkel der Spannklammer, deren Endkante dem Haken zugewandt ist. Der Abstand zwischen der Hakenschulter und der Endkante ist auf die Länge der Haltekralle des Krallenbügels abgestimmt, so daß der Nachfüllsatz in beide Längsrichtungen über den Sicherungskörper an der Haltekralle mit möglichst wenig Spiel abgestützt ist.

Kostengünstig wird der Sicherungskörper aus einem einstückigen Blechteil in einem Stanz-Biegeverfahren hergestellt. Anstatt durch Biegen kann der Haken auch durch Prägen hergestellt werden, indem ein hakenförmiger Vorsprung aus dem Blecharm durch ein Werkzeug herausgedrückt wird.

### Zeichnung

In der Zeichnung ist ein Ausführungsbeispiel der Erfindung dargestellt. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu weiteren sinnvollen Kombinationen zusammenfassen.

Es zeigen:
- Fig. 1: eine Teilansicht eines erfindungsgemäß ausgebildeten Wischblatts,
- Fig. 2: eine vergrößerte Darstellung einer in Fig. 1 mit II bezeichneten Einzelheit,
- Fig. 3: einen Schnitt entlang der Linie III-III in Fig. 2,
- Fig. 4: einen Halbschnitt entlang der Linie IV-IV in Fig. 3,
- Fig. 5: einen Schnitt entlang der Linie III-III in Fig. 2 in noch nicht geprägtem Zustand,
- Fig. 6: einen Schnitt entlang der Linie VI-VI in Fig. 2 und
- Fig. 7: ein Ausgangsblechteil, aus dem der Sicherungskörper gebogen wird.

### Beschreibung der Ausführungsbeispiele

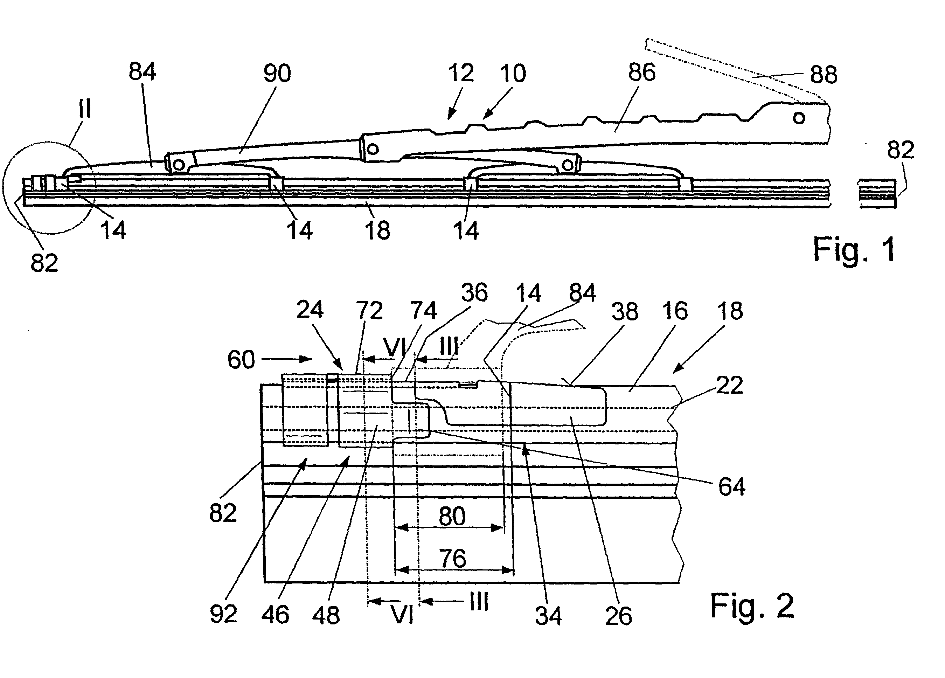

Ein in Fig. 1 dargestelltes Wischblatt 10 gehört zu einem nicht vollständig dargestellten Scheibenwischer eines Kraftfahrzeugs. Das Wischblatt 10 wird mittels eines angetriebenen, in Fig. 1 strichpunktiert dargestellten Wischarms 88 über eine zu wischende Scheibe des Kraftfahrzeugs bewegt. Das Wischblatt 10 umfaßt beim Ausführungsbeispiel ein mehrgliedriges Tragbügelsystem 12 mit an einem Hauptbügel 86 angelenkten Zwischenbügeln 90, mit deren Enden Krallenbügel 84 gelenkig verbunden sind, die an ihren Enden Haltekrallen 14 aufweisen. Die Haltekrallen 14 umfassen eine aus einem elastischen Material bestehende Wischleiste 18. Sowohl die Wischleiste 18 als auch das Tragbügelsystem 12 ist langgestreckt ausgebildet (Fig. 1).

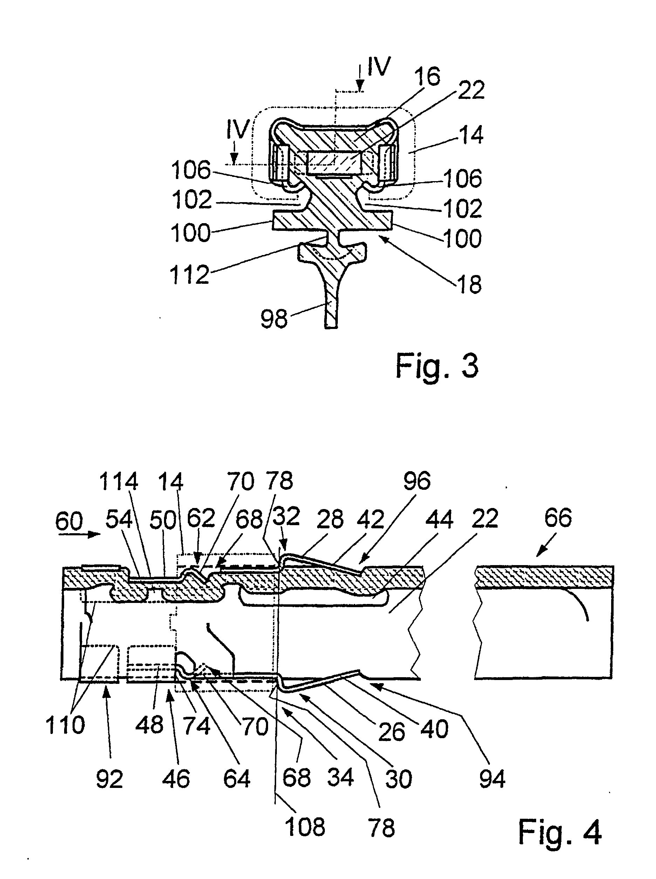

Wie Fig. 3 zeigt, hat die Wischleiste 18 eine Kopfleiste 16, die über einen Kippsteg 112 mit einer auf der zu wischenden Scheibe aufliegenden Wischlippe 98 verbunden ist. An den beiden Längs-Seitenflächen 100 der Kopfleiste 16 sind einander gegenüberliegende Längsnuten 102 angeordnet, in welche in bekannter Weise die Haltekrallen 14 der Krallenbügel 84 greifen. Da die Längsnuten 102 an zwei Endflächen 82 der Wischleiste 18 münden, kann diese ohne Schwierigkeiten in ihrer Längsrichtung in die Haltekrallen 14 der Krallenbügel 84 eingeschoben werden. Um eine ordnungsgemäße Verteilung des Auflagedrucks des Wischblatts 10 bzw. der Wischleiste 18 auf der zu wischenden Scheibe zu erreichen, ist eine langgestreckte Federschiene 22 in der Kopfleiste 16 in einem an den beiden Endflächen 82 der Wischleiste 18 mündenden, rundum geschlossenen Längskanal 20 angeordnet (Fig. 3 und 4).

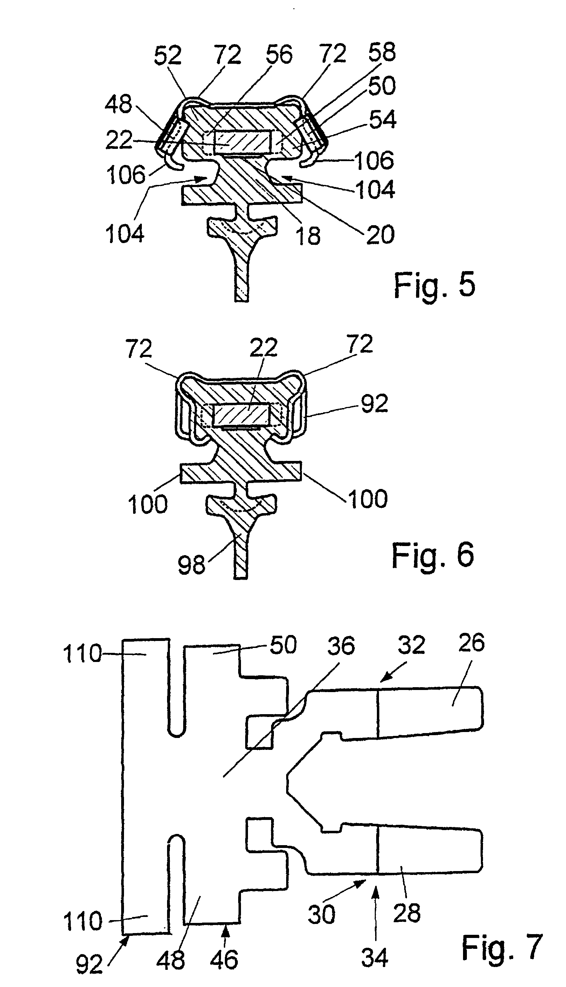

Die Wischleiste 18 wird in den Haltekrallen 14 in Längsrichtung durch einen Sicherungskörper 24 fixiert, der an einem Endbereich der Wischleiste 18 angeordnet ist. Die Federschiene 22 ist an dem Endbereich mit zwei gegenüberliegenden, seitliche, randoffenen Ausnehmungen 56, 58 versehen, in die Kanalwände 52, 54 der Wischleiste 18 durch eine Spannklammer 46 des Sicherungskörpers 24 gedrückt werden (Fig. 4 und 5). Die Spannklammer 46 ist im Ausführungsbeispiel einstückig mit dem Sicherungskörper 24 verbunden, kann jedoch auch als separates Bauteil ausgeführt sein.
Nachdem die Federschiene 22 bei der Montage des Nachfüllsatzes 66 in den Längskanal 20 der Wischleiste 18 eingebracht ist, wird der Sicherungskörper 24 gemeinsam mit der Spannklammer 46 auf die Kopfleiste 16 der Wischleiste 18 aufgeschoben, bis ihre in Fig. 5 dargestellten Schenkel 48, 50 über den Ausnehmungen 56, 58 der Federschiene 22 liegen. Am Sicherungskörper 24 ist eine Führungsklammer 92 angeordnet, die mit zwei quer zur Längserstreckung verlaufenden Schenkeln 110 um die Kopfleiste 16 der Wischleiste 18 in deren Längsnuten 102 greift, um eine günstige Führung zu erreichen (Fig. 2).

Nachdem die Schenkel 48, 50 über die Ausnehmungen 56, 58 geschoben sind, werden diese in Richtung der Pfeile 104 in Fig. 5 nach innen gedrückt, so daß sie mit an ihren Enden angeordneten Haken 106 in die Längsnuten 102 der Kopfleiste 16 greifen (Fig. 3). Dabei ist die Spannklammer 46 so auf die Wischleiste 18 bzw. auf die Ausnehmungen 56, 58 abgestimmt, daß nachdem die Kanalwände 52, 54 durch die Schenkel 48, 50 in die Ausnehmungen 56, 58 der Federschiene 22 gedrückt sind, die Federschiene 22 mit der Wischleiste 18 und diese mit der Spannklammer 46 formschlüssig verbunden ist. In den Ausnehmungen 56, 58 ist ein Steg 114 angeordnet, um den sich das Material der Wischleiste 18 fügt, wenn die Kanalwände 52, 54 der Wischleiste 18 in die Ausnehmungen 56, 58 gedrückt werden. Dadurch wird der Formschluß zwischen der Federschiene 22 und der Wischleiste 18 verbessert.

An den Schenkeln 48, 50 der Spannklammer 46 ist je ein sich in Montagerichtung 60 erstreckender Lappen 62, 64 angeordnet, der bei montiertem Nachfüllsatz 66 von der Haltekralle 14 des Krallenbügels 84 übergriffen wird (Fig. 2 und 4). Wenn die Schenkel 48, 50 gespannt sind, werden auch die Lappen 62, 64 in die Kopfleiste 16 hinein gedrückt. Damit die Wischleiste 18 leicht in die Haltekrallen 14 eingeführt werden kann, befindet sich zwischen den Haltekrallen 14 und der Wischleiste 18 Spiel. Um dieses Spiel im montierten Zustand im Bereich des Sicherungskörpers 24 zu eliminieren, sind die Lappen 62, 64 aus der Ebene der Schenkel 48, 50 heraus nach außen gebogen. In Montagerichtung 60 weisen die Lappen 62, 64 Anlaufflächen 70 auf, die schräg in Richtung Wischleiste 18 verlaufen. Die Anlaufflächen 70 kommen vor den Lappen 62, 64 mit der Haltekralle 14 in Kontakt und drücken dabei die Lappen 62, 64 nach innen, wodurch die Montage erleichtert und das Spiel ausgeglichen wird (Fig. 4).

Um die Wischleiste 18 mit dem Sicherungskörper 24 gegen eine Längsverschiebung gegenüber dem Tragbügelsystem 12 zu sichern, besitzt der Sicherungskörper 24 eine vorzugsweise aus Federstahl gefertigte Federklammer 34 (Fig. 2). Die Federklammer 34 kann als separates Bauteil ausgeführt sein. Es wird jedoch vorgeschlagen, sie einstückig mit der Spannklammer 46 zu verbinden. Sie weist ein plattenförmiges Basisteil 36 auf, das auf einer von der Scheibe abweisenden oberen Fläche 38 der Kopfleiste 16 aufliegt. Von dem Basisteil 36 aus erstrecken sich parallel und mit Abstand zueinander zwei Arme 26, 28. Diese sind gegenüber dem Basisteil 36 um etwa 90° abgekantet, so daß sich seitliche Wangen ergeben, die in Richtung ihres freien Endes 94, 96 einen Haken 30, 32 aufweisen, an den sich in Montagerichtung 60 eine schräg zur Wischleiste 18 verlaufende Führungsfläche 40, 42 anschließt. Die Haken 30, 32 sind durch Biegen oder Prägen der Arme 26, 28 hergestellt und erstrecken sich seitlich nach außen und sind vorzugsweise in einer Querebene 108 angeordnet (Fig. 4). Der Sicherungskörper 24 könnte auch nur mit einem Arm ausgeführt werden, der auf der oberen Fläche 38 der Kopfleiste 16 verläuft und einen Haken mit einer im wesentlichen senkrecht auf der oberen Fläche 38 stehenden Hakenschulter besitzt.

Im montierten Zustand des Sicherungskörpers 24 auf der Wischleiste 18 befindet sich im Bereich des Hakens 30, 32 eine seitliche, randoffene Ausnehmung 44 in der Federschiene 22 (Fig. 4). Dadurch können die Haken 30, 32 bei der Montage und bei der Demontage leicht aus ihrer Einraststellung gegen die Wischleiste 18 gedrückt werden.

Durch die Haken 30, 32 wird der Sicherungskörper 24 und die Wischleiste 18 nur in eine Längsrichtung fixiert. Um die Wischleiste 18 auch in die zweite Längsrichtung zu fixieren, besitzt das Basisteil 36 im Bereich der Schenkel 48, 50 der Spannklammer 46 Auswölbungen 72, deren Endkanten 74 in Richtung der Hakenschultern 78 weisen und die mindestens so hoch sind, daß sich der Sicherungskörper 24 über sie an der Haltekralle 14 abstützen kann. Der Abstand 76 zwischen der Endkante 74 und der Hakenschulter 78 ist auf die Länge 80 der Haltekralle 14 abgestimmt, so daß der Sicherungskörper 24 und damit die Wischleiste 18 in beide Längsrichtungen mit möglichst wenig Spiel fixiert ist.

Es wird vorgeschlagen, den Sicherungskörper 24 mit der Führungsklammer 92, der Spannklammer 46 und der Federklammer 34 aus einem einstückigen Blechteil, wie dies in Fig. 7 dargestellt ist, in einem Stanz-Biegeverfahren herzustellen. Es wird damit ein kompaktes, kostengünstig zu fertigendes Bauteil erreicht.

### Der Nachfüllsatz 66 wird wie folgt montiert:

Nachdem die Federschiene 22 in den Längskanal 20 der Wischleiste 18 eingeschoben ist, wird der Sicherungskörper 24 in Montagerichtung 60 auf die Kopfleiste 16 soweit aufgeschoben, bis die Spannklammer 46 mit ihren noch geöffneten Schenkeln 48, 50 über den Ausnehmungen 56, 58 der Federschiene 22 liegt. Die Schenkel 48, 50 werden zusammengedrückt und drükken dabei die Kanalwände 52, 54 der Wischleiste 18 in die Ausnehmungen 56, 58 der Federschiene 22. Damit ist die Federschiene 22 in der Wischleiste 18 und gleichzeitig der Sicherungskörper 24 auf der Wischleiste 18 fixiert.

Danach wird der Nachfüllsatz 66 mit dem montierten Sicherungskörper 24 in die Haltekrallen 14 des Tragbügelsystems 12 in Montagerichtung 60 eingeschoben, so daß die Haltekrallen 14 in die Längsnuten 102 der Wischleiste 18 greifen. Der Nachfüllsatz 66 wird soweit in die Haltekrallen 14 eingeschoben, bis die Führungsflächen 40, 42 der Haken 30, 32 an den Armen 26, 28 der Federklammer 34 mit einer Haltekralle 14 in Kontakt kommen. Dabei werden die Arme 26, 28 in Richtung der Wischleiste 18 ausgelenkt, wobei die Arme 26, 28 im Bereich der Haken 30, 32 in die Ausnehmungen 44 der Federschiene 22 gedrückt werden. Sind die Haken 30, 32 durch die Haltekralle 14 geschoben, werden diese wieder von der Wischleiste 18 nach außen zurück ausgelenkt und rasten hinter der Haltekralle 14 ein. In dieser Position kommen auch die Endkanten 74 der Auswölbungen 72 mit der Haltekralle 14 in Kontakt. Der Sicherungskörper 24 kann sich damit in beide Längsrichtungen an der Haltekralle 14 abstützen und ist damit gemeinsam mit der Wischleiste 18 in Längsrichtung fixiert.

## Patentansprüche

1. Wischblatt (10) zum Reinigen von Scheiben an Kraftfahrzeugen mit einem Tragbügelsystem (12), das mit an Krallenbügeln (84) angeordneten Haltekrallen (14) eine Kopfleiste (16) einer Wischleiste (18) aus einem elastischen Material umgreift, die mit einem aus Blech geformten Sicherungskörper (24) in Längsrichtung fixiert ist, indem dieser mit der Wischleiste (18) fest verbunden ist und zumindest mit einem an einem Arm (26, 28) angeordneten Haken (30, 32) in Form einer Schnappverbindung die Haltekralle (14) hintergreift, **dadurch gekennzeichnet, daß** der Haken (30, 32) durch Biegen oder Prägen des Arms (26, 28) geformt ist und sich in Montagerichtung (60) eine Führungsfläche (40, 42) an den Haken (30, 32) anschließt.

2. Wischblatt (10) nach Anspruch 1, **dadurch gekennzeichnet, daß** zumindest ein Arm (26, 28) seitlich der Kopfleiste (16) in Längsrichtung der Wischleiste (18) verläuft und daß sich der Haken (30, 32) seitlich nach außen erstreckt.

3. Wischblatt (10) nach Anspruch 2, **dadurch gekennzeichnet, daß** der Sicherungskörper (24) eine Federklammer (34) mit einem plattenförmigen Basisteil (36) aufweist, das auf einer von der Scheibe abweisenden oberen Fläche (38) der Kopfleiste (16) aufliegt und die Federklammer (34) zwei sich im wesentlichen parallel zueinander erstreckende Arme (26, 28) hat und die Haken (30, 32) in einer Querebene (108) angeordnet sind.

4. Wischblatt (10) nach einem der vorhergehenden Ansprüche, **dadurch gekennzeichnet, daß** eine Federschiene (22) in einem Längskanal (20) in der Kopfleiste (16) festgehalten ist, die im Bereich des Hakens (30, 32) eine Ausnehmung (44) aufweist.

5. Wischblatt (10) nach Anspruch 3 oder 4, **dadurch gekennzeichnet, daß** die Federklammer (34) mit dem Basisteil (36) und dem Arm (26, 28) einstückig ausgebildet und aus Federstahl hergestellt ist.

6. Wischblatt (10) Anspruch 4 oder 5, **dadurch gekennzeichnet, daß** der Sicherungskörper (24) eine Spannklammer (46) aufweist, die mit quer zur Längserstreckung verlaufenden Schenkeln (48, 50) die Kopfleiste (16) zumindest teilweise umgreift und seitliche Kanalwände (52, 54) der Wischleiste (18) in Ausnehmungen (56, 58) der Federschiene (22) drückt.

7. Wischblatt (10) nach Anspruch 6, **dadurch gekennzeichnet, daß** sich in der Ausnehmung (56, 58) mindestens ein schmaler, seitlich nach außen weisender Steg (114) befindet.

8. Wischblatt (10) nach Anspruch 6 oder 7, **dadurch gekennzeichnet, daß** die Spannklammer (46) und die Federklammer (34) einstückig ausgeführt sind.

9. Wischblatt (10) nach Anspruch 8, **dadurch gekennzeichnet, daß** an den die Kopfleiste (16) der Wischleiste (18) seitlich umfassenden Schenkeln (48, 50) der Spannklammer (46) je ein sich in Montagerichtung (60) erstreckender Lappen (62, 64) angeordnet ist, der in Montagestellung von der Haltekralle (14) des Tragbügelsystems (12) übergriffen ist.

10. Wischblatt (10) nach Anspruch 9, **dadurch gekennzeichnet, daß** die Lappen(62, 64) aus der Ebene der Schenkel (48, 50) heraus nach außen gekrümmt sind und an ihren freien Enden (68) je eine nach innen gerichtete Anlauffläche (70) aufweisen.

11. Wischblatt (10) nach Anspruch 10, **dadurch gekennzeichnet, daß** das plattenförmige Basisteil (36) im Bereich der Schenkel (48, 50) der Spannklammer (46) zumindest eine Auswölbung (72) mit einer den Haken (30, 32) entgegengerichteten Endkante (74) aufweist, und daß der Abstand (76) zwischen der Endkante (74) und einer Hakenschulter (78) auf die Länge (80) der Haltekralle (14) des Tragbügelsystems (12) abgestimmt ist.

12. Verfahren zur Herstellung des Sicherungskörpers (24) eines Wischblattes nach einem der vorhergehenden Ansprüche, **dadurch gekennzeichnet, daß** er in einem Stanz-Biegevorgang hergestellt wird.

## Claims

1. Wiper blade (10) for cleaning windows on motor vehicles, having a supporting bracket system (12) which engages, by means of retaining claws (14) arranged on claw-type brackets (84), around a top strip (16) of a wiper strip (18) made of elastic material, the said wiper strip being fixed in the longitudinal direction by a securing body (24), which is formed from sheet metal, by the said securing body being connected fixedly to the wiper strip (18) and gripping, in the form of a snap connection, behind the retaining claw (14) at least with a hook (30, 32) which is arranged on an arm (26, 28), **characterized in that** the hook (30, 32) is formed by bending or stamping the arm (26, 28), and a guide surface (40, 42) adjoins the hook (30, 32) in the installation direction (60).

2. Wiper blade (10) according to Claim 1, **characterized in that** at least one arm (26, 28) runs at the side of the top strip (16) in the longitudinal direction of the wiper strip (18), and **in that** the hook (30, 32) extends laterally outwards.

3. Wiper blade (10) according to Claim 2, **characterized in that** the securing body (24) has a spring clip (34) having a plate-like base part (36) which rests on an upper surface (38) of the top strip (16), which surface faces away from the window, and the spring clip (34) has two arms (26, 28) which extend essentially parallel to each other, and the hooks (30, 32) are arranged in a transverse plane (108).

4. Wiper blade (10) according to one of the preceding claims, **characterized in that** a spring rail (22) is secured in a longitudinal channel (20) in the top strip (16), the said spring rail having a recess (44) in the region of the hook (30, 32).

5. Wiper blade (10) according to Claim 3 or 4, **characterized in that** the spring clip (34) is of integral design with the base part (36) and the arm (26, 28) and is produced from spring steel.

6. Wiper blade (10) according to Claim 4 or 5, **characterized in that** the securing body (24) has a clamping clip (46) which at least partially engages around the top strip (16) with legs (48, 50) running transversely with respect to the longitudinal extent, and which presses lateral channel walls (52, 54) of the wiper strip (18) into recesses (56, 58) of the spring rail (22).

7. Wiper blade (10) according to Claim 6, **characterized in that** at least one narrow web (114) which points laterally outwards is situated in the recess (56, 58).

8. Wiper blade (10) according to Claim 6 or 7, **characterized in that** the clamping clip (46) and the spring clip (34) are of integral design.

9. Wiper blade (10) according to Claim 8, **characterized in that** a respective tab (62, 64) extending in the installation direction (60) is arranged on the legs (48, 50) of the clamping clip (46), which legs laterally surround the top strip (16) of the wiper strip (18), the said tab having the retaining claw (14) of the supporting bracket system (12) fitted over it in the installation position.

10. Wiper blade (10) according to Claim 9, **characterized in that** the tabs (62, 64) are curved outwards from the plane of the legs (48, 50) and have an inwardly directed run-on surface (70) on each of their free ends (68).

11. Wiper blade (10) according to Claim 10,
**characterized in that** the plate-like base part (36) has, in the region of the legs (48, 50) of the clamping clip (46), at least one convexity (72) with an end edge (74) directed counter to the hooks (30, 32), and **in that** the distance (76) between the end edge (74) and a hook shoulder (78) is matched to the length (80) of the retaining claw (14) of the supporting bracket system (12).

12. Method for producing the securing body (24) of a wiper blade according to one of the preceding claims, **characterized in that** it is produced in a punching and bending process.

## Revendications

1. Balai d'essuie-glace (10) pour nettoyer les vitres de véhicules automobiles comprenant un système de palonniers (12), qui entoure avec des griffes de fixation (14) prévues sur les palonniers à griffes (84), une barrette de tête (16) d'un balai d'essuie-glace (18) en une matière non élastique, bloquée dans la direction longitudinale par un organe de fixation (24) réalisé en tôle, cet organe étant relié solidairement à la raclette (18) et venant prendre avec au moins un crochet (30, 32) prévu sur un bras (26, 28) dans une forme de liaison enclipsée qui vient prendre derrière la griffe de fixation (14),
**caractérisé en ce que**
les crochets (30, 32) sont mis en forme par cintrage et emboutissage du bras (26, 28) et dans la direction de montage (60) une surface de guidage (40, 42) fait suite aux crochets (30, 32).

2. Balai d'essuie-glace (10) selon la revendication 1,
**caractérisé en ce qu'**
au moins un bras (26, 28) s'étend latéralement de la barrette de tête (16) dans la direction longitudinale de la raclette (18) et le crochet (30, 32) est dirigé latéralement vers l'extérieur.

3. Balai d'essuie-glace (10) selon la revendication 2,
**caractérisé en ce que**
l'organe de sécurité (24) comporte une pince à ressort (34) avec une pièce de base (36) en forme de plaque qui s'appuie contre la surface supérieure (38) de la barrette de tête (16), à l'opposé de la vitre et la pince à ressort (34) comporte deux bras (26, 28) essentiellement parallèles et les crochets (30, 32) sont dans un plan transversal (108).

4. Balai d'essuie-glace (10) selon l'une quelconque des revendications précédentes,
**caractérisé par**
un raidisseur élastique (22) placé dans un canal longitudinal (20) de la barrette de tête (16), et qui comporte une découpe (44) au niveau du crochet (30, 32).

5. Balai d'essuie-glace (10) selon l'une quelconque des revendications 3 ou 4,
**caractérisé en ce que**
les pinces à ressort (34), la pièce de base (36) et le bras (26, 28) sont réalisés en une seule pièce en acier inoxydable.

6. Balai d'essuie-glace (10) selon l'une quelconque des revendications 4 ou 5,
**caractérisé en ce que**
l'organe de fixation (24) comporte une pince de serrage (46) qui entoure au moins partiellement la barrette de tête (16) avec des branches (48, 50) passant transversalement à son extension longitudinale, et pousse les parois latérales du canal (52, 54) au niveau des barrettes d'étanchéité (18) dans des cavités (56, 58) du raidisseur (22).

7. Balai d'essuie-glace (10) selon la revendication 6,
**caractérisé en ce que**
la cavité (56, 58) comporte au moins une nervure (114) étroite s'étendant latéralement vers l'extérieur.

8. Balai d'essuie-glace (10) selon l'une quelconque des revendications 6 ou 7,
**caractérisé en ce que**
la pince de serrage (46) et la pince élastique (34) sont réalisées en une seule pièce.

9. Balai d'essuie-glace (10) selon la revendication 8,
**caractérisé en ce que**
la pince de serrage (46) a des branches (48, 50) enveloppantes latéralement la barrette de tête (16) du balai d'essuie-glace (18), auxquelles est associée chaque fois une patte (62, 64) qui s'étend dans la direction de montage (60) et qui est recouverte par les griffes de fixation (14) du système de palonniers (12) en position de montage.

10. Balai d'essuie-glace (10) selon la revendication 9,
**caractérisé en ce que**
les pattes (62, 64) sont cintrées vers l'extérieur à partir du plan des branches (48, 50) et leurs extrémités libres (68) ont chaque fois une surface d'attaque (70) dirigée vers l'intérieur.

11. Balai d'essuie-glace (10) selon la revendication 10,
**caractérisé en ce que**
la pièce de base (36) en forme de plaque comporte au niveau des branches (48, 50) des pinces de serrage (46), au moins une partie bombée (72) avec une arête d'extrémité (74) tournée à l'opposé des crochets (30, 32) et la distance (76) entre l'arête d'extrémité (74) et un épaulement à crochet (78) est accordée sur la longueur (80) de la griffe de fixation (14) du système d'étrier de support (12).

12. Procédé de fabrication d'un élément de sécurité (24) d'un balai d'essuie-glace selon l'une quelconque des revendications précédentes,
**caractérisé en ce qu'**
il est fabriqué par une opération d'emboutissage-cintrage.
